# EUROPÄISCHE PATENTSCHRIFT

(11) **EP 2 155 426 B1**
(45) Veröffentlichungstag und Bekanntmachung des Hinweises auf die Patenterteilung: **19.10.2016**
(21) Anmeldenummer: 08735811.5
(22) Anmeldetag: 04.04.2008
(51) Int. Cl.: B23D 51/02

(54) **HUBSÄGEMASCHINE MIT EINER PENDELFÜHRUNGSEINRICHTUNG FÜR EIN HUBBEWEGUNGEN DURCHFÜHRENDES SÄGEBLATT**
JIGSAW MACHINE HAVING A PENDULUM GUIDE DEVICE FOR A JIGSAW SAW BLADE WHICH EXECUTES RECIPROCATING MOTIONS
SCIE SAUTEUSE AYANT UN DISPOSITIF DE GUIDAGE OSCILLANT POUR UNE LAME DE SCIE À MOUVEMENT ALTERNATIF

(30) Priorität: 04.06.2007 DE 102007025967
(43) Veröffentlichungstag der Anmeldung: 24.02.2010
(73) Patentinhaber: Robert Bosch GmbH, 70442 Stuttgart (DE)
(72) Erfinder: CASOTA, Marcel, CH-4460 Gelterkinden (CH); ZHAO, Jingying, CH-4528 Zuchwil (CH)
(86) Internationale Anmeldenummer: PCT/EP2008/054070
(87) Internationale Veröffentlichungsnummer: WO 2008/148592

(56) Entgegenhaltungen:
- EP-A- 0 736 353
- DE-C1- 4 320 233

## Beschreibung

Die Erfindung betrifft eine Hubsägemaschine mit einer Pendelführungseinrichtung für ein Hubbewegungen durchführendes Sägeblatt nach dem Oberbegriff des Anspruchs 1.

### Stand der Technik

Eine solche Hubsägemaschine ist der EP 0 736 353 A1 zu entnehmen. Hubsägemaschinen mit Hubbewegung durchführenden Sägeblättern sind bekannt, insbesondere in Gestalt von handgeführten Stichsägemaschinen. Bei diesen ist die seitliche Führung beziehungsweise Abstützung des Sägeblattes während des Sägevorgangs maßgeblich für die Güte des Schnittes verantwortlich, da das Sägeblatt nämlich während der Hubbewegung im Schnitt dazu tendiert, dem ihm durch das Schnittgut entgegengebrachten Widerstand insbesondere seitlich auszuweichen. In Schnittrichtung betrachtet ist dabei eine seitliche Abweichung des Sägeblattes aus der ihm zugedachten, im Wesentlichen zur Oberfläche des Schnittgutes rechtwinkligen Ausrichtung mit seitlichen Bewegungen des Sägeblattendes nach links oder rechts nachteilig für die Schnittgüte und Sägeleistung. Darüber hinaus wird die Sägeblattstandzeit durch die mechanische Beanspruchung in Folge durch Biegung durch dieses unerwünschte Ausweichen reduziert. Im Stand der Technik sind daher Pendelführungseinrichtungen für solche Hubbewegungen durchführende Sägeblätter bekannt. Diese sollen freie Weglängen innerhalb der Hubbewegung, innerhalb derer das Sägeblatt ausweichen kann, klein halten. Es sind Lösungen gebräuchlich, bei denen die Führung des Sägeblattes an Stichsägemaschinen über einen Einstich an einer Führungs- oder Abstützrolle zwischen der das Sägeblatt haltenden Spanneinrichtung und dem Schnittgut erfolgt und/oder dieses Sägeblatt seitlich geführt wird. Es sind ebenfalls Lösungen bekannt, die diese Seitenführung zusätzlich oder alternativ über separate, seitliche Führungsbacken im Bereich unmittelbar über dem Schnittgut bewirken. An diesen Lösungen ist nachteilig, dass die bekannten Führungen des Sägeblattes ein Ausweichen des Sägeblattes während der Hubbewegung nicht ausreichend verhindern. Das Sägeblatt selbst wird hierbei in einer bogenförmigen Art und Weise um das Führungselement herum verformt, insbesondere dann, wenn nur eine Führungsrolle zwischen Spanneinrichtung und Schnittgut vorhanden ist, wobei das eine Führungselement hinsichtlich der Ausbildung der Bogenform als Knotenpunkt wirkt. Gerade bei Pendelbewegungen ausführenden Sägeblättern ist hierbei die Führung des Sägeblattes nicht in allen Phasen der Pendelhubbewegung ausreichend gewährleistet. Überdies kommt es durch die Einleitung der Pendelbewegung an dem Abstützelement zu einer erheblichen Belastung des Abstützelements und des Sägeblattrückens.

### Offenbarung der Erfindung

Aufgabe der Erfindung ist es, eine Hubsägemaschine mit einer Pendelführungseinrichtung für ein Hubbewegungen durchführendes Sägeblatt bereitzustellen, die die genannten Nachteile vermeidet.

Hierzu wird eine Hubsägemaschine mit einer Pendelführungseinrichtung für ein Hubbewegungen durchführendes Sägeblatt, mit an einem Sägeblattrücken des Sägeblatts angreifenden Führungselementen, die einem Gestell zugeordnet sind, wobei mindestens zwei Führungselemente vorgesehen, von denen eines gestellfest und das andere beweglich am Gestell in Richtung auf den Sägeblattrücken vorgespannt gelagert ist, und wobei das gestellfeste Führungselement eine erste Führungsrolle und das beweglich gelagerte Führungselement eine zweite Führungsrolle ist, vorgeschlagen, wobei die erste Führungsrolle einen größeren Durchmesser als die zweite Führungsrolle aufweist. An dem Gestell sind demzufolge mindestens zwei Führungselemente vorgesehen. Eines hiervon ist fest mit dem Gestell verbunden, während das andere am Gestell gelagert ist, also eine Bewegung relativ zum Gestell ausführen kann, und hierbei eine Vorspannung in Richtung auf den Sägeblattrücken ausübt. Das erste Führungselement, das fest mit dem Gestell verbunden ist, dient hierbei der Einleitung der Pendelbewegung des Sägeblattes, also der Bewirkung eines Impulses auf den Sägeblattrücken im Wesentlichen quer zur Hubrichtung. Das zweite, relativ zum Sägerücken vorgespannte Führungselement, dient hierbei lediglich der Seitenführung des Sägeblattes, nicht aber seiner Abstützung und nicht der Einleitung der Pendelbewegung. Das beweglich gelagerte Führungselement in Form einer zweiten Führungsrolle, das mit Vorspannung am Gestell gelagert ist, ist folglich ebenfalls in Rollenform und hierbei so ausgestaltet, dass es sich im Zuge der Hubbewegung beziehungsweise Hubpendelbewegung des Sägeblattes abrollt.

Die erste Führungsrolle dient insbesondere der Einleitung der Pendelbewegung, durch sie wird ein Impuls auf das Hubbewegungen durchführende Sägeblatt ausgeübt, wobei dieser Impuls im Wesentlichen quer zur Hubbewegung in Vorschubrichtung erfolgt. Dadurch, dass die erste Führungsrolle hierbei einen relativ großen Durchmesser aufweist, erfolgt diese Impulseinleitung und damit Beanspruchung sowohl des Sägeblattrückens, an dem sich die erste Führungsrolle abstützt, als auch der ersten Führungsrolle selbst über eine relativ große Berührfläche. Hierdurch wird die mechanische Beanspruchung sowohl des Sägeblattrückens als auch insbesondere der ersten Führungsrolle deutlich reduziert. Die kleinere Führungsrolle, die lediglich der Seitenführung des Sägeblattes dient, wobei eine Impulsbeaufschlagung des Sägeblattes durch die zweite Führungsrolle nicht erfolgt, sondern diese lediglich über die Vorspannung zur Sicherstellung eines entsprechend guten Kontaktes anliegt, ist eine durchmessergroße Ausführung nicht erforderlich, sondern im Gegenteil eine relativ durchmesserkleine Ausführung zur Vermeidung unnötiger Bauraumbeanspruchung sinnvoll.

Die Verwendung einer ersten Führungsrolle als Führungselement lässt im Zuge der Hubbewegung beziehungsweise der Hubpendelbewegung ein Abrollen des hieran gelagerten Sägeblattes zu, so dass die Friktion zwischen Sägeblatt beziehungsweise Sägeblattrücken und Führungselement, nämlich der ersten Führungsrolle, stark verringert ist. Dies führt zu einer deutlichen Reduzierung thermischer und mechanischer Beanspruchung sowohl des Sägeblattes als auch des Führungselements.

In einer weiteren Ausführungsform ist das gestellfeste Führungselement mit einer Lagerung drehbar am Gestell gelagert. Das gestellfeste Führungselement kann demzufolge Drehbewegungen ausführen, die relativ zum Gestell erfolgen. In einer bevorzugten Ausführungsform ist die Lagerung eine Nadellagerung. Nadellagerungen sind hoch beanspruchbar und weisen eine präzise Führung auf, so dass insbesondere auch unter Last eine gute, leichtgängige Führung des Sägeblatts erfolgt.

In einer weiteren bevorzugten Ausführungsform weist mindestens die zweite Führungsrolle außenumfangsseitig eine im Wesentlichen V-förmige Führungskerbe auf. Durch die V-förmige Führungskerbe wird gewährleistet, dass die zweite Führungsrolle im Zusammenspiel mit ihrer Vorspannung in Richtung auf den Sägeblattrücken das Sägeblatt über dem Sägeblattrücken stets mittig greift, da die V-förmige Führungskerbe eine selbstzentrierende Wirkung über den Sägeblattrücken beziehungsweise die Schultern des Sägeblattrückens aufweist.

In einer weiteren Ausführungsform ist die zweite Führungsrolle in einem Schwingkäfig gelagert, der pendelbeweglich an, insbesondere in, dem Gestell lagert. Das Gestell weist folglich einen Schwingkäfig auf, insbesondere einen solchen, der zwischen Bestandteilen des Gestells lagert. In diesem Schwingkäfig lagert ihrerseits die zweite Führungsrolle. Die zweite Führungsrolle weist demzufolge eine Achse beziehungsweise Axiallagerung auf, die in dem Schwingkäfig angeordnet ist. Die zweite Führungsrolle pendelt gewissermaßen mitsamt dem Schwingkäfig.

In einer weiteren, bevorzugten Ausführungsform ist der Schwingkäfig auf der Drehachse der ersten Führungsrolle pendelnd gelagert. Der Schwingkäfig und die erste Führungsrolle weisen demzufolge dieselbe Drehachse beziehungsweise Lagerachse auf. Hierdurch wird die Position der zweiten Führungsrolle mitsamt dem Schwingkäfig um die Drehachse der ersten Führungsrolle herum verändert. Die Vorspannung der zweiten Führungsrolle relativ zum Sägeblattrücken ergibt sich hierbei als eine Pendel- beziehungsweise Kreisteilbewegung um die Drehachse der ersten Führungsrolle. Die Ausführungsform ist im Übrigen einfach und kostengünstig herzustellen, da lediglich eine Drehachse sowohl für die erste Führungsrolle als auch für den Schwingkäfig berücksichtigt werden muss.

In einer weiteren Ausführungsform weist der Schwingkäfig zwei Schwingarme auf, zwischen denen die erste Führungsrolle und/oder die zweite Führungsrolle aufgenommen ist. Der Schwingkäfig seinerseits ist folglich mit zwei Schwingarmen ausgebildet, die die erste Führungsrolle und/oder die zweite Führungsrolle seitlich umgreifen.

In einer weiteren, bevorzugten Ausführungsform sind die Schwingarme jeweils in Richtung auf den Sägeblattrücken vorgespannt. Die bereits beschriebene Vorspannung des zweiten Führungselements, insbesondere der zweiten Führungsrolle, wird demzufolge über die Vorspannung der beiden Schwingarme bewirkt. Die Ausführung als Schwingarm-Konstruktion erlaubt hierbei eine geringe Relativbewegung der beiden Schwingarme zueinander, so dass plötzlich auftretende, ungleiche Kräfte auf das Sägeblatt entgegen der Vorschubrichtung im gewissen Umfange ausgeglichen werden können und sich das Sägeblatt über das zweite Führungselement, das in diesen beiden Schwingarmen gelagert ist, wieder in die gewünschte Lage einpendelt.

In einer weiteren, ganz besonders bevorzugten Ausführungsform erfolgt die Vorspannung mittels einer Feder, insbesondere Schraubendruckfeder. Schraubendruckfedern sind bekannt und in allen möglichen Ausführungsformen leicht verfügbar. Über eine geeignete Abstützung am Gestell lässt sich über die Schraubendruckfeder die benötigte Vorspannung leicht im geforderten Maße bewirken, in dem sich die Schraubendruckfeder an den Schwingarmen einerseits und an dem Gestell, beispielsweise einer Nase des Gestells, andererseits abstützt. Die Vorspannung ist auf diese Weise sehr einfach und preiswert zu bewerkstelligen, wobei die Vorspannung durch einfaches Entfernen der Schraubendruckfeder, beispielsweise für Wartungszwecke, aufgehoben werden kann. Bevorzugt weist das Gestell eine Wegbegrenzung der Schwingarme auf oder die Schwingarmen weisen ihrerseits durch geeignete Ausbildung eine Wegbegrenzung auf, so dass der Schwingweg in einer solchen Art und Weise begrenzt wird, dass die Schraubendruckfeder in einem Zustand, in dem kein

(wegbegrenzendes) Sägeblatt eingesetzt ist, nicht ihre Einbauposition verlassen kann.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels und von Figuren näher erläutert.

Es zeigen
- Figur 1: eine Pendelführungseinrichtung einer Hubsägemaschine;
- Figur 2: ein Gestell der Pendelführungseinrichtung mit Führungselementen;
- Figur 3: einen Querschnitt durch das Gestell und die Führungselemente und
- Figur 4: einen im Gestell vorgespannten Schwingkäfig.

### Ausführungsform(en) der Erfindung

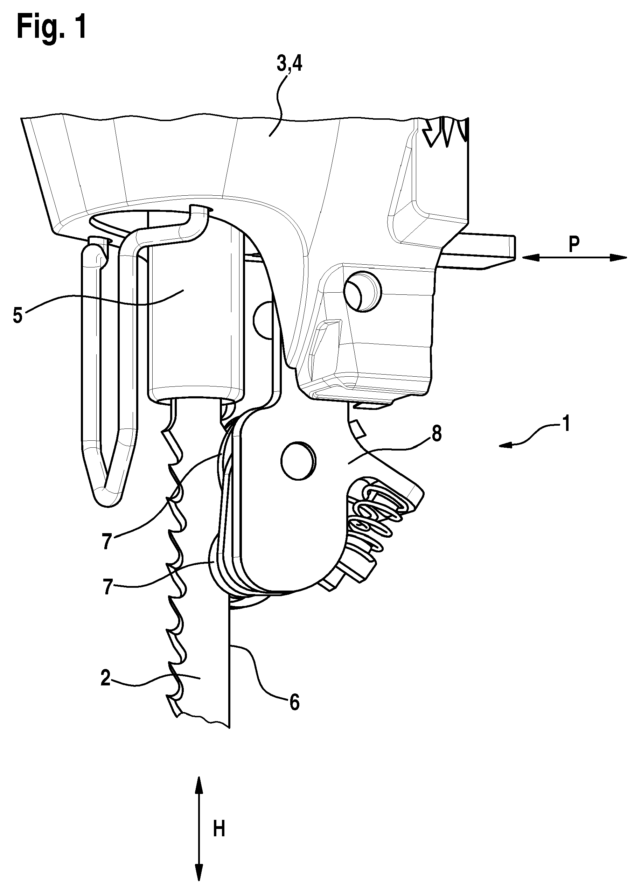

Figur 1 zeigt eine Pendelführungseinrichtung 1 für ein Hubbewegungen durchführendes Sägeblatt 2 einer nur abschnittsweise dargestellten Hubsägemaschine 3, nämlich einer Stichsäge 4. Die Stichsäge 4 weist eine Sägeblattaufnahme 5 zur Aufnahme des Sägeblattes 2 auf, wobei die Sägeblattaufnahme 5 eine Hubbewegung H des Sägeblattes 2 über eine nicht dargestellte Motor-/Getriebeanbindung bewirkt. Die Hubbewegung H, also die Vertikalbewegung in Richtung der Längserstreckung des Sägeblattes 2, wird über die Sägeblattaufnahme 5 eingeleitet. Zur Einleitung einer Pendelbewegung zur Bewirkung eines pendelnden Sägeschnittes, also eines solchen, bei dem das Sägeblatt 2 zusätzlich zu seiner vertikalen Hubbewegung auch noch in Vorschubrichtung vor- und zurückbewegt wird, so dass eine höhere

Schnittgeschwindigkeit erzielt werden kann, ist die Pendelführungseinrichtung 1 vorgesehen, die das Sägeblatt 2 an dessen Sägeblattrücken 6 über Führungselemente 7 führend beaufschlagt; zur Einleitung der Pendelbewegung wird die Pendelführungseinrichtung 1 in Vorschubrichtung, mithin quer zur vertikalen Hubbewegung des Sägeblattes 2, über ein die Führungselemente 7 aufnehmendes Gestell 8 in einer Pendeleinleitung P vor- und zurückbewegt, so dass in der Summe der vertikalen Hubbewegung und der horizontalen Vor- und Zurückbewegung (der Pendeleinleitung P) des Sägeblattes 2 die Pendelhubbewegung zur Bewirkung des Pendelschnittes resultiert. Die Pendeleinleitung P wird über das Gestell 8 und mindestens ein Führungselement 7 im Wege einer Impulsübertragung auf das Sägeblatt 2 über dessen Sägeblattrücken 6 bewirkt. Die Pendelhubbewegung, die den Pendelschnitt ergibt, resultiert als Summe aus der Pendeleinleitung P und der vertikalen Hubbewegung H.

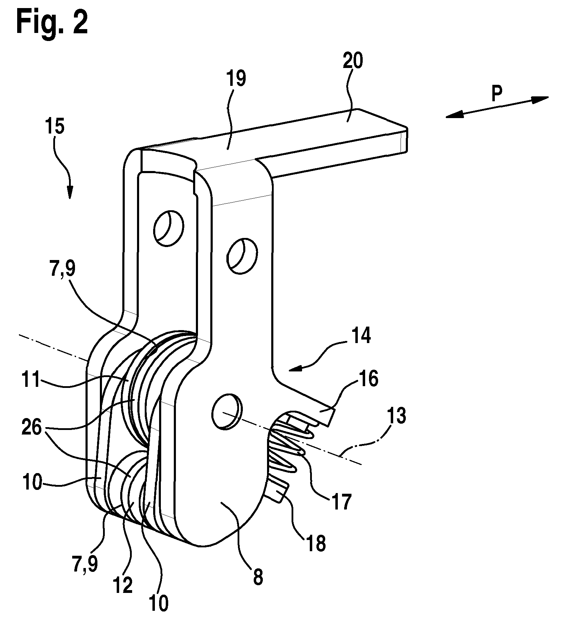

Figur 2 zeigt das Gestell 8, mit als Führungsrollen 9 ausgebildeten Führungselementen 7, wobei die Führungsrollen 9 innerhalb des Gestells 8 und innerhalb eines innerhalb des Gestells 8 angeordneten Schwingkäfigs 10 angeordnet sind. Die Führungsrollen 9 sind hierbei als eine obere, erste Führungsrolle 11 und als eine unter dieser angeordnete, untere zweite Führungsrolle 12 ausgebildet. Sowohl die erste Führungsrolle 11 als auch die zweite Führungsrolle 12 werden von einem Schwingkäfig 10 umgriffen. Hierbei lagert die zweite Führungsrolle 12 in dem Schwingkäfig 10, während die erste Führungsrolle 11 ebenso wie der Schwingkäfig 10 an dem Gestell 8 lagert. Die erste Führungsrolle 11 und der Schwingkäfig 10 weisen folglich eine gemeinsame Lagerachse 13 auf. Die erste Führungsrolle 11 ist im Durchmesser wesentlich größer als die zweite Führungsrolle 12. Beide Führungsrollen 9 weisen außenumfangsseitig eine im Wesentlichen V-förmige Führungskerbe 26 auf, innerhalb derer sich das hier nicht abgebildete Sägeblatt 2 mit seinem Sägeblattrücken 6 (vergleiche Figur 1) abstützt. Um die Lagerachse 13 ist der Schwingkäfig 10 mit der in ihm gelagerten zweiten Führungsrolle 12 pendelbeweglich gelagert. Das Gestell 8 weist an seiner Gestellrückseite 14, die einer Abstützseite 15 für das hier nicht dargestellte Sägeblatt 2 (vergleiche Figur 1) gegenüberliegt, hebeiförmige Abstützpunkte 16 auf, an denen sich eine Schraubendruckfeder 17 einerseits abstützt, wobei der zweite Abstützpunkt der

Schraubendruckfeder 17 rückseitig des Schwingkäfigs 10 an einem Abstützhebel 18 liegt, wodurch eine Vorspannung der zweiten Führungsrolle 12 relativ zu dem hier nicht dargestellten Sägeblatt 2 gebildet wird, da die zweite Führungsrolle 12 relativ zur ersten Führungsrolle 11 um die Lagerachse 13 in Richtung auf die Abstützseite 15 des Gestells 8 gedrückt wird. Die erste Führungsrolle 11 lagert demzufolge drehbeweglich um die Lagerachse 13, und der Schwingkäfig 10 ist pendelbeweglich um die Lagerachse 13 in dem Gestell 8 gelagert. Das Gestell 8 weist zur Ausführung der Pendeleinleitung P einen in der Art eines Kniehebels 19 ausgebildeten Aufnahmekörper 20 auf, der im Wesentlichen parallel zur Bewegung der Pendeleinleitung P ausgebildet ist. Der Aufnahmekörper 20 kann hierbei in jeder für die jeweilige Hubsägemaschine geeigneten und erforderlichen Form angepasst oder in einer geeigneten und erforderlichen Form ausgebildet sein.

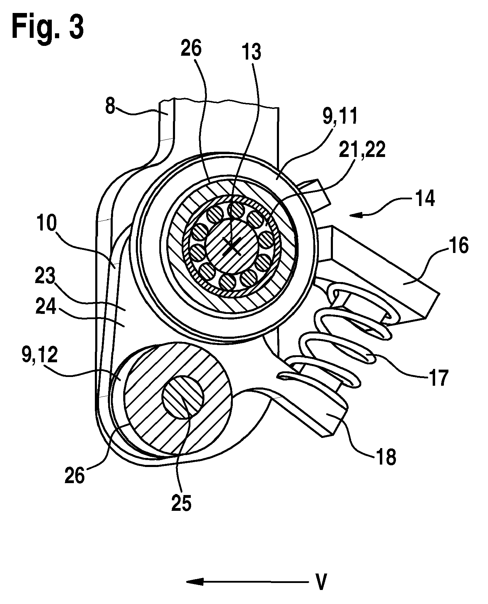

Figur 3 zeigt einen Querschnitt durch das Gestell 8 in Höhe der Führungsrollen 9. Die Führungsrollen 9 sind wieder als im Durchmesser deutlich größere, erste Führungsrolle 11 und als im Durchmesser kleinere zweite Führungsrolle 12 ausgebildet. Die erste Führungsrolle 11 ist über eine Lagerung 21, die als Nadellager 22 ausgebildet ist, um die Lagerachse 13 drehbar gelagert. Ebenfalls um die Lagerachse 13 schwenkbeweglich ist der Schwingkäfig 10 gelagert, der aus zwei Schwingarmen 23 gebildet ist, die die Führungsrolle 9 zwischen sich aufnehmen. Aufgrund der Querschnittsdarstellung ist hier nur der eine Schwingarm 23, nämlich der in Vorschubrichtung V betrachtet rechte Schwingarm 24 sichtbar. An den Schwingarmen 23 ist für die drehbewegliche Lagerung der zweiten Führungsrolle 12 eine Führungsrollenlagerung 25 ausgebildet. Beide Schwingarme 23 sind um die Lagerachse 13 schwenkbeweglich gelagert und bilden den Schwingkäfig 10 aus, an dem die zweite Führungsrolle 12 über die Führungsrollenlagerung 25 drehbeweglich lagert. Jeder Schwingarm 23 weist den Abstützhebel 18 auf, der rückseitig des Schwingkäfigs, also auf der der zweiten Führungsrolle 12 abgewandten Seite angeordnet ist, und an dem sich die Schraubendruckfeder 17 zum Bewirken einer Vorspannung relativ zu dem hier nicht dargestellten Sägeblatt 2 in Vorschubrichtung V abstützt, wobei sich die Schraubendruckfeder 17 mit ihrem anderen Ende an dem Abstützpunkt 16, der auf der Gestellrückseite 14 ausgebildet ist, abstützt. Die Schraubendruckfeder 17 bewirkt also über den

Abstützhebel 18 eine Vorspannung der zweiten Führungsrolle 12 in Vorschubrichtung V relativ zur gestellfest ausgebildeten ersten Führungsrolle 11. Die Führungsrollen 9 weisen die im Wesentlichen
V-förmige Führungskerbe 26 auf. Die V-förmige Führungskerbe 26 bewirkt eine Zentrierung des hier nicht dargestellten Sägeblattes 2 über dessen Sägeblattrücken 6 auch bei unterschiedlicher Sägeblattstärke beziehungsweise -dicke. Hierdurch wird eine relativ zur Stärke der Führungsrollen 9 zentrische Zwangsführung des nicht dargestellten Sägeblattes 2 in den Führungsrollen 9 über die V-förmige Führungskerbe 26 erreicht.

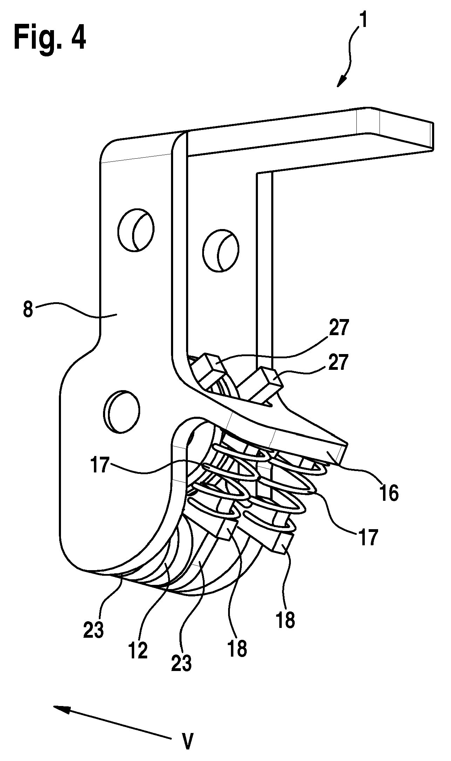

Figur 4 zeigt die Pendelführungseinrichtung 1 in einer rückseitigperspektivischen Ansicht, wobei die Abstützpunkte 16, die gestellfest am Gestell 8 ausgebildet sind, sowie die Abstützhebel 18, die fest, insbesondere einstückig, mit den Schwingarmen 23 ausgebildet sind, sowie die zwischen diesen angeordneten (linken und rechten) Schraubendruckfedern 17 ersichtlich sind. An den Schwingarmen 23 ist ferner, rückseitig und oberseitig der Abstützpunkt 16 jeweils ein Ausschlagsbegrenzer 27 hebeiförmig angelenkt, der eine durch die Schraubendruckfeder 17 bewirkte, unerwünscht große Wegstrecke in Vorschubrichtung V des aus den Schwingarmen 23 und der zweiten Führungsrolle 12 gebildeten Schwingkäfigs 10 verhindert, wenn das hier nicht dargestellte Sägeblatt 2 nicht eingespannt ist. In einem solchen Fall könnte nämlich die Schraubendruckfeder 17 herausspringen, was aber durch die Ausschlagsbegrenzer 27 verhindert wird.

## Patentansprüche

1. Hubsägemaschine (3) mit einer Pendelführungseinrichtung (1) für ein Hubbewegungen durchführendes Sägeblatt (2), mit an einem Sägeblattrücken (6) des Sägeblatts (2) angreifenden Führungselementen (7), die einem Gestell (8) zugeordnet sind, wobei mindestens zwei Führungselemente (7) vorgesehen sind, von denen eines gestellfest und das andere beweglich am Gestell (8) in Richtung auf den Sägeblattrücken (6) vorgespannt gelagert ist, und wobei das gestellfeste Führungselement (7) eine erste Führungsrolle (11) ist und das beweglich gelagerte Führungselement (7) eine zweite Führungsrolle (9) ist, **dadurch gekennzeichnet, dass** die erste Führungsrolle (11) einen größeren Durchmesser als die zweite Führungsrolle (12) aufweist.

2. Hubsägemaschine nach Anspruch 1, **dadurch gekennzeichnet, dass** das gestellfeste Führungselement (7) mit einer Lagerung (21) drehbar am Gestell (8) gelagert ist.

3. Hubsägemaschine nach Anspruch 2, **dadurch gekennzeichnet, dass** die Lagerung (21) eine Nadellagerung (22) ist.

4. Hubsägemaschine nach einem der vorhergehenden Ansprüche, **dadurch gekennzeichnet, dass** mindestens die zweite Führungsrolle (12) außenumfangsseitig eine im Wesentlichen V-förmige Führungskerbe (26) aufweist.

5. Hubsägemaschine nach einem der vorhergehenden Ansprüche, **dadurch gekennzeichnet, dass** die zweite Führungsrolle (12) in einem Schwingkäfig (10) gelagert ist, der pendelbeweglich an, insbesondere in, dem Gestell (8) lagert.

6. Hubsägemaschine nach einem der vorhergehenden Ansprüche, **dadurch gekennzeichnet, dass** der Schwingkäfig (10) auf der Drehachse der ersten Führungsrolle (11) pendelnd gelagert ist.

7. Hubsägemaschine nach einem der vorhergehenden Ansprüche, **dadurch gekennzeichnet, dass** der Schwingkäfig (10) zwei Schwingarme (23,24) aufweist, zwischen denen die erste Führungsrolle (11) und/oder die zweite Führungsrolle (12) aufgenommen ist.

8. Hubsägemaschine nach einem der vorhergehenden Ansprüche, **dadurch gekennzeichnet, dass** die beiden Schwingarme (23,24) jeweils in Richtung auf den Sägeblattrücken (6) vorgespannt sind.

9. Hubsägemaschine nach einem der vorhergehenden Ansprüche, **dadurch gekennzeichnet, dass** die Vorspannung mittels mindestens einer Feder, insbesondere Schraubendruckfeder (17), erfolgt.

## Claims

1. Reciprocating sawing machine (3) having a pendulum guide device (1) for a saw blade (2) executing reciprocating movements, having guide elements (7) that act on a saw-blade back (6) of the saw blade (2) and are assigned to a mount (8), wherein at least two guide elements (7) are provided, one of which is fixed to the mount and the other of which is mounted movably on the mount (8) in a manner preloaded in the direction of the saw-blade back (6), and wherein the guide element (7) fixed to the mount is a first guide roller (11) and the movably mounted guide element (7) is a second guide roller (9), **characterized in that** the first guide roller (11) has a larger diameter than the second guide roller (12).

2. Reciprocating sawing machine according to Claim 1, **characterized in that** the guide element (7) fixed to the mount is mounted on the mount (8) in a rotatable manner by way of a bearing (21).

3. Reciprocating sawing machine according to Claim 2, **characterized in that** the bearing (21) is a needle bearing (22).

4. Reciprocating sawing machine according to one of the preceding claims, **characterized in that** at least the second guide roller (12) has a substantially V-shaped guide groove (26) on its outer circumference.

5. Reciprocating sawing machine according to one of the preceding claims, **characterized in that** the second guide roller (12) is mounted in an oscillating cage (10) which is mounted on, in particular in, the mount (8) so as to be able to execute pendulum motion.

6. Reciprocating sawing machine according to one of the preceding claims, **characterized in that** the oscillating cage (10) is mounted in a pendular manner on the rotation axis of the first guide roller (11).

7. Reciprocating sawing machine according to one of the preceding claims, **characterized in that** the oscillating cage (10) has two swing arms (23, 24) between which the first guide roller (11) and/or the second guide roller (12) is accommodated.

8. Reciprocating sawing machine according to one of the preceding claims, **characterized in that** the two swing arms (23, 24) are each preloaded in the direction of the saw-blade back (6).

9. Reciprocating sawing machine according to one of the preceding claims, **characterized in that** the preloading takes place by means of at least one spring, in particular helical compression spring (17).

## Revendications

1. Scie sauteuse (3) comprenant un dispositif de guidage oscillant (1) pour une lame de scie (2) effectuant des mouvements alternatifs, comprenant des éléments de guidage (7) s'engageant au niveau d'un dos de lame de scie (6) de la lame de scie (2), lesquels sont associés à un bâti (8), au moins deux éléments de guidage (7) étant prévus, dont l'un est supporté de manière fixée au bâti et l'autre est supporté de manière mobile sur le bâti (8) de manière précontrainte dans la direction du dos de lame de scie (6), et l'élément de guidage fixé au bâti (7) étant un premier rouleau de guidage (11) et l'élément de guidage (7) supporté de manière mobile étant un deuxième rouleau de guidage (9), **caractérisée en ce que** le premier rouleau de guidage (11) présente un plus grand diamètre que le deuxième rouleau de guidage (12).

2. Scie sauteuse selon la revendication 1, **caractérisée en ce que** l'élément de guidage (7) fixé au bâti est supporté à rotation sur le bâti (8) au moyen d'un palier (21).

3. Scie sauteuse selon la revendication 2, **caractérisée en ce que** le palier (21) est un palier à aiguilles (22).

4. Scie sauteuse selon l'une quelconque des revendications précédentes, **caractérisée en ce qu'**au moins le deuxième rouleau de guidage (12) présente, du côté de la périphérie extérieure, une encoche de guidage (26) essentiellement en forme de V.

5. Scie sauteuse selon l'une quelconque des revendications précédentes, **caractérisée en ce que** le deuxième rouleau de guidage (12) est supporté dans une cage oscillante (10) qui est supportée de manière déplaçable avec un mouvement oscillant sur, en particulier dans, le bâti (8).

6. Scie sauteuse selon l'une quelconque des revendications précédentes, **caractérisée en ce que** la cage oscillante (10) est supportée de manière oscillante sur l'axe de rotation du premier rouleau de guidage (11).

7. Scie sauteuse selon l'une quelconque des revendications précédentes, **caractérisée en ce que** la cage oscillante (10) présente deux bras oscillants (23, 24) entre lesquels est reçu le premier rouleau de guidage (11) et/ou le deuxième rouleau de guidage (12).

8. Scie sauteuse selon l'une quelconque des revendications précédentes, **caractérisée en ce que** les deux bras oscillants (23, 24) sont à chaque fois précontraints dans la direction du dos de lame de scie (6).

9. Scie sauteuse selon l'une quelconque des revendications précédentes, **caractérisée en ce que** la précontrainte s'effectue au moyen d'au moins un ressort, en particulier un ressort de compression à boudin (17).
